# EUROPÄISCHE PATENTSCHRIFT

(11) **EP 1 353 278 B1**
(45) Veröffentlichungstag und Bekanntmachung des Hinweises auf die Patenterteilung: **07.09.2005**
(21) Anmeldenummer: 02024709.4
(22) Anmeldetag: 06.11.2002
(51) Int. Cl.: G06F 17/30

(54) **Vergleich von Quelldateien**
Comparison of source files
Comparaison de fichiers sources

(30) Priorität: 10.04.2002 DE 10215852
(43) Veröffentlichungstag der Anmeldung: 15.10.2003
(73) Patentinhaber: Software Engineering GmbH, 40470 Düsseldorf (DE)
(72) Erfinder: Neumann, Ralf, D-46539 Dinslaken (DE)
(74) Vertreter: Cohausz & Florack

(56) Entgegenhaltungen:
- WO-A-00/49526
- WO-A-01/02996
- US-A- 6 009 271
- US-A- 6 081 805
- US-B1- 6 240 409
- BAXTER I D ET AL: "Clone detection using abstract syntax trees" SOFTWARE MAINTENANCE, 1998. PROCEEDINGS., INTERNATIONAL CONFERENCE ON BETHESDA, MD, USA 16-20 NOV. 1998, LOS ALAMITOS, CA, USA,IEEE COMPUT. SOC, US, 16. November 1998 (1998-11-16), Seiten 368-377, XP010318609 ISBN: 0-8186-8779-7

## Beschreibung

Die Erfindung betrifft ein Verfahren zum Vergleich zweier Datenbankabfragen aufweisenden Quelldateien, bei dem die Datenbankabfragen aus den zwei Quelldateien ermittelt werden, und bei dem die ermittelten Datenbankabfragen einer ersten Quelldatei mit den ermittelten Datenbankabfragen einer zweiten Quelldatei verglichen werden. Des Weiteren betrifft die Erfindung eine Vergleichsvorrichtung mit Quelldateien lesenden Lesemitteln und mit Datenbankabfragen aus Quelldateien extrahierenden Extrahiermitteln.

Für den Zugriff auf Datenbanken, insbesondere relationale Datenbanken wie DB2 von IBM, werden Datenbankabfragen von externen Programmen, die mit den Datenbanken interagieren, generiert. Diese Datenbankabfragen werden über eine standardisierte Schnittstelle, die Structured Query Language (SQL) Schnittstelle, durchgeführt. Hierbei werden SQL-Abfragen der Programme an die Datenbank übermittelt und in der Datenbank abgearbeitet. Diese SQL-Abfragen können aus einer Vielzahl von Abfrageparametern bestehen, wobei beispielsweise die Parameter "Cursor Name", "Statement Typ" (Select, Insert, Update, Delete), "Tabellen", "Joins", "Predicates", "Select-, Update- und Insert-Columns", "Select Option Text" und "Select Option Columns" genutzt werden können.

Bei der Abfrage einer Datenbank mittels SQL werden in der Datenbank Aktionen angestoßen, welche die Beantwortung der Datenbankabfrage ermöglichen. Die Antwortzeiten der Datenbankabfragen können in Abhängigkeit der gewählten Abfrageparameter stark variieren. Dabei ist es erwünscht, dass die SQL-Abfragen optimiert sind und möglichst geringe Antwortzeiten ermöglichen.

Programme, die mit den Datensätzen der Datenbanken arbeiten, werden im Laufe der Zeit verändert. Bei einer Veränderung der Programme kann es zu einer Veränderung der SQL-Abfragen kommen, die eventuell zu veränderten Antwortzeiten führen können. In manchen Fällen kommt es dazu, dass die Antwortzeiten negativ beeinflusst werden und nicht mehr tolerabel sind. Dann ist es notwendig, dass diejenigen SQL-Abfragen ermittelt wird, die unter anderem für die verlängerten Antwortzeiten verantwortlich sind.

Herkömmlich werden in einem solchen Fall die Datenbankabfragen der ursprünglichen Programms und die des neuen Programms miteinander verglichen. Dazu wird sequenziell jede Datenbankabfrage des ursprünglichen Programms ermittelt, die an der gleichen Stelle in dem neuen Programm stehende Datenbankabfrage gesucht und die Zeichenfolge der Datenbankabfragen verglichen. Häufig sind jedoch die Datenbankabfragen in den Programmversionen lediglich in ihrer Position verschoben. Dies bedeutet, dass eine Datenbankabfrage, die in einem alten Programm zu Beginn des Programms auftauchte, in einem neuen Programm eventuell am Ende des Programms auftaucht. Mit der herkömmlichen Methode lässt sich ein solcher Versatz der Datenbankabfrage nicht ermitteln, da herkömmlicher weise eine erste Datenbankabfrage in einem alten Programm mit der ersten Datenbankabfrage in dem neuen Programm und in der gleichen Weise die folgenden Datenbankabfragen überprüft werden.

Auch kann es vorkommen, dass die Zeichenfolge einer Datenbankabfrage verändert worden ist, ihre Semantik jedoch nicht. Bei herkömmlichen Vergleichen wird dies jedoch nicht erkannt und der Vergleich ergibt, dass sich die Datenbankabfragen verändert haben. Schließlich kann es sein, dass sich Datenbankabfragen nur geringfügig in ihrer Semantik, jedoch erheblich in ihrer Syntax geändert haben, weshalb diese durch herkömmlich Methoden als verändert aufgezeigt wird.

Zum Auffinden der die langen Antwortzeiten verursachenden Datenbankabfragen ist es herkömmlich notwendig, alle gefundenen Veränderungen manuell zu untersuchen, was aufgrund der oben aufgezeigten Probleme bei der Suche nach veränderten Datenbankabfragen einen erheblichen Aufwand bedeutet.

Daher ergibt sich das erfindungsgemäße technische Problem, einem effizienten Vergleich von Quelldateien, die Datenbankabfragen enthalten, zur Verfügung zu stellen.

Das zuvor hergeleitete technische Problem wird erfindungsgemäß dadurch gelöst, dass die Syntax jeder Datenbankabfrage mit Hilfe einer Syntaxanalyse ermittelt wird und die Syntaxen der Datenbankabfragen der Quelldateien miteinander verglichen werden.

Die Syntax einer Datenbankabfrage gibt die einzelnen Elemente der Datenbankabfrage bezüglich ihrer grammatikalischen Regeln, ihrer Zusammenstellung, wieder. Die Bedeutung der Elemente ist unerheblich. Änderungen in der Syntax bedeute eine geänderte Zusammenstellung oder Reihenfolge von Elementen. Dies muss jedoch nicht zwangsläufig zu einer geänderten Semantik führen.

Eine Syntaxanalyse wird beispielsweise mit Hilfe eines Parserprogramms durchgeführt. Hierbei werden die syntaktischen Elemente der Datenbankabfrage ermittelt. Erfindungsgemäß werden alle Datenbankabfragen einer ersten Quelldatei in ihre syntaktischen Elemente zerlegt, alle Datenbankabfragen einer zweiten Quelldatei in ihre syntaktischen Elemente zerlegt und alle Syntaxen der Datenbankabfragen der ersten Quelldatei mit allen Syntaxen der Datenbankabfragen der zweiten Quelldatei verglichen. Auftretende Unterschiede können nun besser bewertet werden, da Veränderungen in der Positionierung der syntaktischen Elemente innerhalb einer Datenbankabfrage erkannt werden. Veränderungen in der Zeichenfolge führen nicht zu einer Veränderung der Syntax, weshalb geänderte Zeichenfolgen beim Vergleich nicht berücksichtigt werden.

Die Quellen für die Ermittlung der Syntaxen können beispielsweise der Source Code der Quelldateien, der Database-Request-Module (DBRM) der Quelldateien, die DB2 Kataloginformationen sowie beliebige andere Zugriffsmodule der Quelldateien sein.

Um zu gewährleisten, dass jede Datenbankabfrage der ersten Quelldatei mit jeder Datenbankabfragen der zweiten Quelldatei verglichen wird, wird vorgeschlagen, dass jede Datenbankabfrage der ersten Quelldatei mit jeder Datenbankabfrage der zweiten Quelldatei kombiniert wird.

Der Zugriff auf die ermittelten Datenbankabfragen wird erleichtert, wenn die Syntaxen der Datenbankabfragen gespeichert werden.

Eine Datenbankabfrage setzt sich aus syntaktischen Elementen zusammen, die verschiedenen Kategorien zugeordnet werden können. Um zu gewährleisten, dass bei einem Vergleich syntaktische Elemente der entsprechenden Kategorien miteinander verglichen werden, wird vorgeschlagen, dass syntaktische Elemente der Datenbankabfragen kategorisiert gespeichert werden.

In diesem Zusammenhang ist es auch vorteilhaft, wenn die einander entsprechenden syntaktischen Elemente der kombinierten Datenbankabfragen miteinander verglichen werden. Hierbei werden beispielsweise einzelne Teile einer SQL-Abfrage miteinander verglichen. Gemäß der SQL-Spezifikationen werden Abfragen und Parameter bestimmten Kategorien zugeordnet. Wird die Zeichenfolge der Datenbankabfrage untersucht, werden die einzelnen Abfrageparameter, die syntaktischen Elemente, ermittelt und deren Zuordnung zu den einzelnen Kategorien durchgeführt.

Bei der Durchführung einer Datenbankabfrage, insbesondere einer SQL-Datenbankabfrage, bewirken verschiedene Parameter unterschiedliche Antwortzeiten. Ein veränderten Select-Befehl hat geringere Auswirkungen als ein geänderter Where-Befehl. Daher wird vorgeschlagen, dass den syntaktischen Elemente Wertigkeiten zugeordnet werden. Hierbei kann es vorteilhaft sein, wenn ein Unterschied zwischen den syntaktischen Elementen der kombinierten Datenbankabfragen mit Hilfe der Wertigkeit gewichtet wird. Das bedeutet, dass Veränderungen in dem syntaktischen Elementen, die geringe Auswirkung auf die Antwortzeit haben, geringer gewichtet werden können als solche, die große Auswirkung auf die Antwortzeit haben. Dadurch wird es möglich, festzustellen, ob gefundene Veränderungen tatsächlich auch Auswirkungen auf die Performance einer Datenbankabfrage haben.

Um die Iteration durch die Datenbankabfragen schnell durchführen zu können und einen direkten Zugriff auf die gefundenen Datenbankabfragen sowie deren Syntaxen zu haben, wird vorgeschlagen, dass in einer Tabelle für jede ermittelte Datenbankabfrage eine diese zugehörige Syntax bezeichnende Kennung gespeichert wird. Auch kann eine die Datenbankabfrage der Quelldatei zuordnenden Zuordnungskennung gespeichert werden. Zusätzlich kann ein Vergleichswert der ein Vergleichsergebnis mit einer anderen Datenbankabfrage wiedergibt gespeichert werden.

Die Syntax einer Datenbankabfrage wird zusammen mit ihrem syntaktischen Element vorzugsweise in einer Tabelle gespeichert. Um auf diese Tabelle zurückgreifen zu können, wird die die Syntax bezeichnende Kennung in der Tabelle gespeichert. Ferner kann auf die Datenbankabfrage sofort zugegriffen werden und deren Position in der Quelldatei bestimmt werden, wenn die Zuordnungskennung gespeichert wird. Schließlich kann durch das Speichern eines Vergleichsergebnisses ermittelt werden, ob in der zweiten Quelldatei eine ähnliche oder gleiche Datenbankabfrage gefunden worden ist. Beispielsweise wird beim Vergleich einer Datenbankabfrage einer ersten Quelldatei mit allen Datenbankabfragen einer zweiten Quelldatei zunächst im ersten Schritt eine absolut verschiedene Datenbankabfrage gefunden. Das Vergleichsergebnis wird als Vergleichswert gespeichert. Im nächsten Schritt wird eine Datenbankabfrage in der zweiten Quelldatei gefunden, die eine gewisse Ähnlichkeit mit der Datenbankabfrage der ersten Quelldatei aufweist, wobei diese Ähnlichkeit als Vergleichsergebnis gespeichert wird, da sie höher ist, als die zu vor gefundene Ähnlichkeit. Schließlich wird eine Datenbankabfrage in der zweiten Quelldatei gefunden, die vollkommen mit der Datenbankabfrage der ersten Quelldatei übereinstimmt. Da die Ähnlichkeit dieser beiden Quelldateien wiederum größer ist als die zuvor gefundene Ähnlichkeit, wird dieser Vergleichswert gespeichert.

Durch das Speichern des Vergleichswertes lässt sich diejenige Datenbankabfrage in der zweiten Quelldatei finden, welche die größte Ähnlichkeit mit der Datenbankabfrage der ersten Quelldatei aufweist.

Da verschiedene syntaktische Elemente unterschiedliche Wertigkeiten aufweisen, wird vorgeschlagen, dass jede Kombination von Datenbankabfragen mit Hilfe der gewichteten Unterschiede ein Ähnlichkeitswert zugeordnet wird. Unterschieden sich die zwei Datenbankabfragen in syntaktischen Elementen, die nur geringe Auswirkung auf die Antwortzeit haben, führt dies dazu, dass sie dennoch ähnlich sind. Wird ein Unterschied in einem syntaktischen Element gefunden, welches eine große Auswirkung auf eine Antwortzeit haben kann, führt dies dazu, dass die Datenbankabfragen eine geringere Ähnlichkeit aufweisen. Das bedeutet, dass nur geringe Veränderungen in der Zeichenfolge, die jedoch syntaktische Elemente beinhaltet, die wesentliche Auswirkung auf die Antwortzeit haben, zu einer geringen Ähnlichkeit der Datenbankabfragen führen, welche auf den ersten Blick ähnlich erscheinen können.

Um nun die Fehlerkontrolle zu erleichtern, wird vorgeschlagen, dass zunächst identische kombinierte Datenbankabfragen als identisch ausgewiesen werden. Alle Datenbankabfragen der ersten Quelldatei, zu denen als identisch bewertete Datenbankabfragen in der zweiten Quelldatei gefunden worden sind - und umgekehrt -, werden als identisch ausgewiesen. Diese müssen dann nicht mehr kontrolliert werden, da sie keine Auswirkung auf veränderte Antwortzeiten der Datenbank haben.

Auch sehr ähnliche Datenbankabfragen haben nur geringe Auswirkung auf die Antwortzeit der Datenbank, weshalb vorgeschlagen wird, das äquivalente kombinierte Datenbankabfragen als identisch ausgewiesen werden. Äquivalent bedeutet, dass lediglich syntaktische Elemente, die nur geringe Auswirkung auf die Antwortzeit haben, die Datenbankabfragen unterscheiden. Diese Datenbankabfragen können auch als identisch ausgewiesen werden.

Schließlich wird vorgeschlagen, dass ähnliche kombinierte Datenbankabfragen mit ihrem Ähnlichkeitswert ausgewiesen werden.

Um nun die Anzahl der zu überprüfenden Datenbankabfragen begrenzen zu können, wird vorgeschlagen, dass ein Grenzwert bestimmt und der Ähnlichkeitswert am Grenzwert gemessen wird. Dann kann mit Hilfe des Grenzwertes die Datenbankabfragen als ähnlich oder unähnlich ausgewiesen werden. Überschreitet der Ähnlichkeitswert eines Paares von Datenbankabfragen den Grenzwert, so werden diese Datenbankabfragen als ähnlich ausgewiesen. Liegt der Ähnlichkeitswert unterhalb eines Grenzwertes, so kann geschlossen werden, dass diese Datenbankabfragen nicht ähnlich sind und als neu oder gelöscht ausgewiesen werden können.

Schließlich ist es hilfreich, wenn die zwei Quelldateien in ihrer Gesamtheit miteinander verglichen werden können, wozu vorgeschlagen wird, dass die Gesamtabweichung der Datenbankabfragen der ersten Quelldatei von der zweiten Quelldatei ermittelt wird. Diese Gesamtabweichung ist ein Maß dafür, wie viele und in welchem Maße sich die Datenbankabfragen in einer zweiten Quelldatei von einer ersten Quelldatei geändert haben.

Ein weiterer Gegenstand der Erfindung ist eine Vergleichsvorrichtung, insbesondere mit einem zuvor beschriebenen Verfahren, mit Quelldateien lesenden Lesemitteln und mit Datenbankabfragen aus Quelldateien extrahierenden Extrahiermitteln. Die Lesemittel sind funktionelle Blöcke, die die Quelldateien lesen, also ihren Inhalt ermitteln. Extrahiermittel sind funktionelle Blöcke, die aus dem Inhalt der Quelldateien die Datenbankabfragen extrahieren.

Ein effizientes und genaues Ermitteln von geänderten Datenbankabfragen wird dadurch erreicht, dass die Syntax einer Datenbankabfrage analysierende Analysemittel vorgesehen sind und die syntaktischen Elemente der Datenbankabfragen vergleichende Vergleichsmittel vorgesehen sind. Die Analysemittel, beispielsweise ein Parser, sind funktionelle Blöcke die die Datenbankabfrage analysieren und deren Syntax extrahieren. Dazu können die Analysemittel die Syntax in syntaktische Elemente zerlegen und so den Vergleichsmitteln zur Verfügung stellen. Vergleichsmittel empfangen jeweils zwei Syntaxen und vergleichen diese miteinander. Mit Hilfe der Vergleichsmittel ist es möglich, jede Datenbankabfrage der ersten Quelldatei mit jeder Datenbankabfrage der zweiten Quelldatei bezüglich der syntaktischen Elemente zu vergleichen.

Vorzugsweise sind Speichermittel vorgesehen, mit deren Hilfe syntaktische Elemente der Datenbankabfragen gespeichert werden. Speichermittel sind Funktionseinheiten, die Daten speichern. Mit Hilfe der Speichermittel ist so ein späterer Zugriff auf die syntaktischen Elemente jeder Datenbankabfrage möglich.

Ferner wird vorgesehen, dass die Ergebnisse der Vergleichsmittel wichtende Wichtungsmittel vorgesehen sind. Die Wichtungsmittel sind Funktionseinheiten, die Ergebnisse mit Faktoren kombinieren können und dienen dazu, den syntaktischen Elementen Wertigkeiten zuzuordnen. Diese Wertigkeiten beziehen sich darauf, inwiefern sich ein syntaktisches Element auf eine Antwortzeit einer Datenbank bei einer Datenbankabfrage auswirkt.

Schließlich wird vorgeschlagen, dass die gewichteten Ergebnisse bewertende Ausscheidungsmittel vorgesehen sind. Die Ausscheidungsmittel sind funktionelle Elemente, die einzelnen Datenbankabfragen einen Ähnlichkeitswert zuordnen. Mit Hilfe der Ausscheidungsmittel ist es möglich, ähnliche von unähnlichen Datenbankabfragen zu unterscheiden und somit die Anzahl der zu untersuchenden Datenbankabfragen einzugrenzen.

Nachfolgend wird die Erfindung anhand einer Ausführungsbeispiele zeigenden Zeichnung näher erläutert. In der Zeichnung zeigen:
- Fig. 1: den Ablauf eines erfindungsgemäßen Verfahrens;
- Fig. 2: eine erfindungsgemäße Vorrichtung

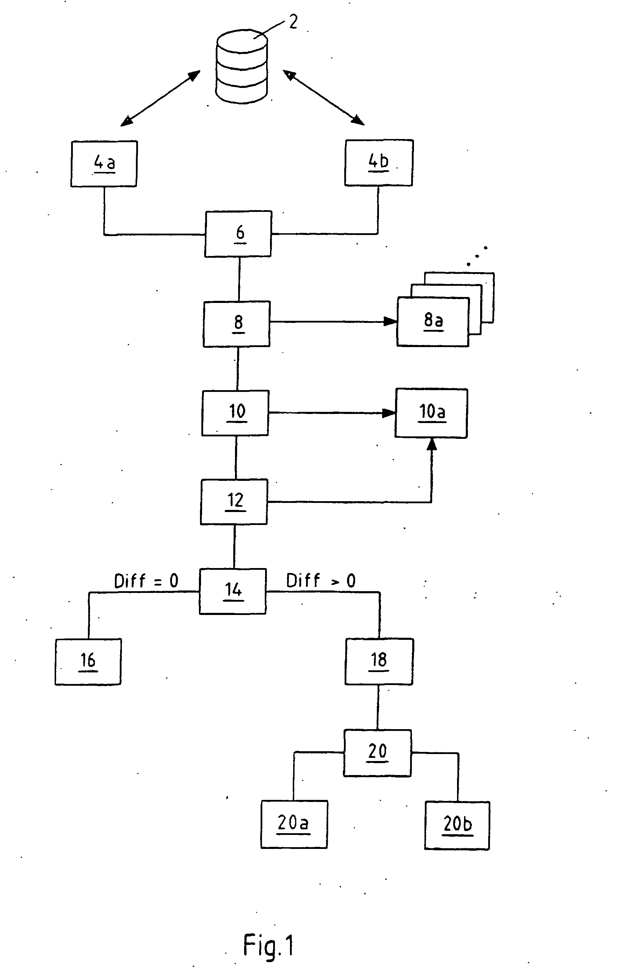

Fig. 1 zeigt eine Datenbank 2, die eine Vielzahl von Daten aufweist. Diese Daten können aus der Datenbank mit Hilfe von Structured Query Language (SQL) Abfragen extrahiert werden. Programme 4 arbeiten mit der Datenbank 2 mit Hilfe der SQL-Abfragen. Abhängig von den in den Programmen 4 enthaltenden SQL-Abfragen variieren die Verarbeitungszeiten in den Programmen 4 voneinander. Wird ein altes Programm 4a durch ein neues Programm 4b ersetzt, so ist es wünschenswert, wenn die Unterschiede in den SQL-Abfragen zwischen den Programmen 4a,4b ermittelbar wären und somit eine Analyse der geändert SQL-Abfragen möglich wäre.

Hierzu wird in einem Schritt 6 das jeweilige Programm 4a,4b analysiert und alle SQL-Abfragen extrahiert. Dies wird zunächst für das alte Programm 4a durchführt und im Anschluss daran für das neue Programm 4b. Die Quellen für das Extrahieren im Schritt 6 können beispielsweise die Source-Codes der Programme 4, die Database-Request-Module (DBRM) Schnittstellen der Programme 4, die DB2 Kataloginformationen (Collection, Package and Version) sowie beliebige andere Quellen, die über verschiedene Zugriffsmodule ausgelesen werden können, sein.

Alle extrahierten SQL-Abfragen werden im Schritt 8 in ihre syntaktischen Elemente zerlegt. Hierbei kommt ein Parser zum Einsatz, der die SQL-Abfragen in ihrer jeweiligen syntaktischen Elemente zerlegt. Für jede in dem Programm 4a und 4b enthaltene SQL-Abfrage wird eine Tabelle 8a angelegt, in der die syntaktischen Elemente kategorisiert abgespeichert werden. Außerdem ist ein Verweis auf die Position der SQL-Abfrage in den Programmen 4 vermerkt.

Nachdem im Schritt 8 alle SQL-Abfragen zerlegt und in den einzelnen Tabellen 8a gespeichert worden sind, wird im Schritt 10 in einer Speichertabelle 10a pro SQL der Schlüssel der Parser-Tabelle 8a, die Position der SQL-Abfrage im Programm 4a,4b und ein Schalter, ob das SQL bereits einer anderen SQL zugeordnet worden ist, abgelegt.

Im Schritt 12 werden die einzelnen SQL-Abfragen, die in Tabelle 8a abgelegt worden sind, miteinander verglichen. Dabei werden alle SQL-Abfragen eines alten Programms 4a mit den SQL-Abfragen des neuen Programm 4b verglichen. Hierbei können beispielsweise die syntaktischen Elemente Coursor Name, Statement Typ, Tabellen, Joins, Predicates, Select-, Update- und Insert-Columns, Select Option Text und Select Option Columns miteinander verglichen werden. Für jede Kombination von SQL-Abfragen des alten Programms 4a mit SQL-Abfragen des neuen Programms 4b wird eine Treffergenauigkeit ermittelt.

Im Schritt 14 werden für alle Paare eine prozentuale Abweichung sowie eine gewichtete Bewertung ermittelt. Bei der prozentualen Abweichung werden die Unterschiede zwischen den einzelnen SQL-Abfragen absolut betrachtet. Bei der gewichteten Bewertung werden für einzelne syntaktische Elemente unterschiedliche Wichtungen festgelegt und auftretende Unterschiede anhand dieser Wichtungen gewichtet. Das bedeutet, das einzelne syntaktische Elemente eine geringer Auswirkung auf die gewichtete Abweichung haben als andere. Das rührt daher, dass verschiedene syntaktische Elemente einer SQL-Abfragen unterschiedliche Auswirkungen auf die Performance der SQL-Abfrage haben. Beispielsweise bewirkt eine Veränderung der Reihenfolge der Select Columns-Abfrage eine unmerkliche Änderung der Performance der SQL-Abfrage, wohingegen eine geänderte Where-Bedingung in eine SQL-Abfrage eine große Änderung der Performance der SQL-Abfrage bewirkt.

Nachdem im Schritt 14 die Unterschiede der einzelnen SQL-Abfragen des Programms 4a mit denen des Programms 4b durchgeführt worden sind, werden diese Unterschiede ausgewertet. Finden sich jeweils Paare von SQL-Abfragen in den Programmen 4a und 4b, die nicht voneinander abweichen, so wird deren Differenz als 0 ausgewiesen und diese Paare werden im Schritt 16 als übereinstimmend markiert. Die als übereinstimmend markierten Paare können bei der weiteren Betrachtung unberücksichtigt bleiben. Das neue Programm 4b hat sich gegenüber dem alten Programm 4a in Bezug auf eine so gefundene SQL-Abfrage nicht geändert.

Alle als nicht übereinstimmend - ihre Differenz ist größer 0 - markierten Paare werden im Schritt 18 ausgewertet, wobei für jede SQL-Abfrage des alten Programms 4a die SQL-Abfrage des neuen Programms 4b gesucht wird, die die größte Übereinstimmung aufweist.

Nachdem alle SQL-Abfragen untersucht und die besten Paare im Schritt 18 ermittelt worden sind, wird im Schritt 20 ein Schwellwertvergleich durchgeführt.

Hierzu wird ein Schwellwert festgelegt, der die niedrigste Abweichung zwischen gefundenen Paaren bestimmt, die als nicht mehr übereinstimmend bewertet werden. Alle SQL-Abfragen, die sich zum Teil geändert haben, deren Höhe der Abweichung jedoch kleiner als der Schwellwert ist, werden als teilweise übereinstimmend im Schritt 20a ausgewiesen und können bei der Analyse der Programme 4a und 4b zunächst unberücksichtigt bleiben.

Hierbei spielt die Wichtung der syntaktischen Elemente der SQL-Abfrage eine entscheidende Rolle. Zwar kann sich die Zeichenfolge einer SQL-Anfrage in einem Programm 4b von einem Programm 4a erheblich unterscheiden, jedoch unterscheiden sich diese beiden SQL-Abfragen nur in einem syntaktischen Element, welches geringe Auswirkung auf die Performance des Programms hat. Eine solche Abweichung kann unberücksichtigt bleiben.

Wird in dem Schwellwertvergleich 20 eine Abweichung in einem vorher als bestmöglich übereinstimmend gefundenen Paar festgestellt, die über dem festgelegten Schwellwert liegt, so wird dieses SQL-Paar im Schritt 20b als gelöscht bzw. neu bewertet und markiert. Alle SQL-Abfragen, die in einem Programm 4b gegenüber den SQL-Abfragen im Programm 4a erhebliche Unterschiede aufweisen oder nicht mehr vorhanden sind, werden somit als neu oder gelöscht ausgewiesen und markiert, so dass diese SQL-Abfragen bei der Analyse des neuen Programms 4b zunächst berücksichtigt werden können.

Es besteht eine große Wahrscheinlichkeit, dass SQL-Abfragen, die sich erheblich geändert haben, die Performance eines neuen Programms 4b gegenüber dem alten Programm 4a eher verändern als diejenigen SQL-Abfragen, die sich nur unwesentlich oder überhaupt nicht geändert haben. Durch den erfindungsgemäßen Vergleich wird es möglich, eine Vorauswahl der SQL-Abfragen zu gewährleisten, die die Analyse eines neuen Programms gegenüber einem alten Programm erleichtern.

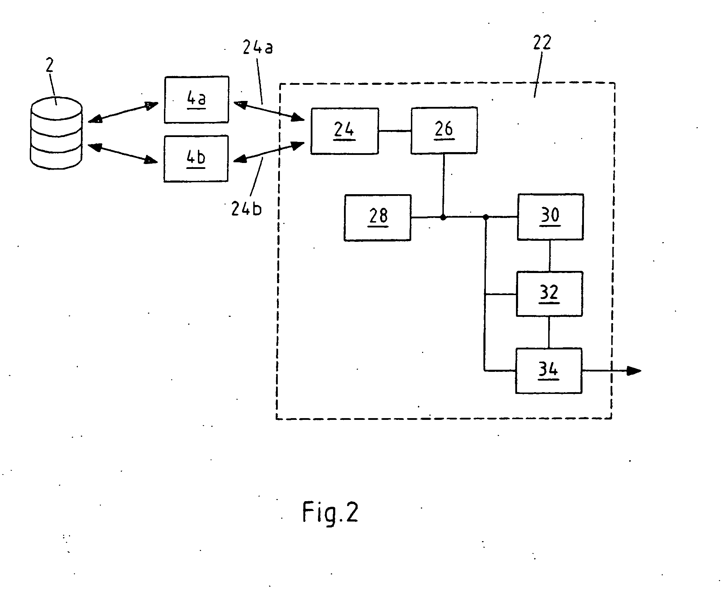

In Fig. 2 ist eine erfindungsgemäße Vergleichsvorrichtung dargestellt. Programme 4a und 4b arbeiten auf einer Datenbank 2, insbesondere einer DB2 Datenbank von IBM, mit Hilfe von SQL-Abfragen. Wird ein neues Programm 4b eingeführt und ein altes Programm 4a ersetzt, so kommt es häufig dazu, dass sich die Performance des neuen Programms 4b gegenüber dem alten Programm 4a erheblich verändert. Dies liegt unter anderem daran, dass sich die SQL-Abfragen vom Programm 4a zum Programm 4b geändert haben. Um eine Analyse der SQL-Abfragen zu erleichtern, wird eine Vergleichsvorrichtung 22 vorgeschlagen.

Die Lesemittel 24 greifen auf die SQL-Abfragen der Programme 4 über Schnittstellen 24a,24b zu. Die durch die Lesemittel 24 ermittelten SQL-Abfragen der jeweiligen Programme 4 werden durch die Extraktionsmittel 26 in ihre syntaktischen Elemente zerlegt. Für jede SQL-Abfrage wird in Speichermitteln 28 eine Tabelle mit den geordneten syntaktischen Elementen der jeweiligen SQL-Abfrage abgespeichert. Somit liegen in den Speichermitteln 28 für die beiden Programme 4a und 4b Tabellen mit allen SQL-Abfragen vor, wobei die Tabellen die SQL-Abfragen nach syntaktischen Elementen geordnet abspeichern.

Vergleichsmittel 30 greifen auf die Speichermittel 28 zu und lesen die Tabellen der SQL-Abfragen aus. Mit Hilfe der Vergleichsmittel 30 werden SQL-Abfragen des Programms 4a mit SQL-Abfragen des Programms 4b verglichen. Beim Vergleich werden alle SQL-Abfragen der beiden Programme miteinander verglichen. Werden durch die Vergleichsmittel 30 SQL-Abfragen gefunden, die bezüglich ihrer syntaktischen Elemente einander entsprechen, werden diese SQL-Abfragen mit Hilfe der Ausscheidungsmittel 32 als identisch ausgewiesen. Identische ausgewiesene SQL-Abfragen müssen bei einer Analyse auf Unterschieden zwischen den Programmen 4a und 4b nicht mehr berücksichtigt werden.

Die durch die Vergleichsmittel 30 ermittelten Unterschiede in den SQL-Abfragen werden mit Hilfe der Wichtungsmittel 34 gewichtet. Das bedeutet, dass Unterschiede in den einzelnen syntaktischen Elementen unterschiedlich bewertet werden. Nachdem eine Wichtung aller Unterschiede durchgeführt worden ist, werden die Paare von SQL-Abfragen gesucht, die sich in den beiden Programmen 4a und 4b am ähnlichsten sind. In den Ausscheidungsmitteln 32 wird das Maß der Ähnlichkeit zwischen den gefundenen Paaren ausgewertet und mit einem Schwellwert verglichen. Sind Paare von SQL-Abfragen einander ähnlich, d. h. liegen ihre gewichteten Unterschiede unter einem gewissen Schwellwert, so werden sie als teilweise identisch ausgewiesen. SQL-Abfragen, die sich kaum ähnlich sind, d. h. ihr gewichteter Wert der Unterscheidung liegt über dem Schwellwert, werden als neu bzw. gelöscht ausgewiesen.

Bei einer Analyse auf Unterschiede zwischen den Programmen 4a und 4b müssen zunächst die als neu bzw. gelöscht ausgewiesenen SQL-Abfragen untersucht werden. Dadurch ist es möglich, schnell und effizient Unterscheide zwischen zwei Programmversionen zu ermitteln und eventuell auftretende Performance-Probleme schnell beheben zu können.

### Bezugszeichenliste

- 2: Datenbank
- 4a,b: Abfrageprogramme
- 6: Extrahieren
- 8: Zerlegen
- 8a: Parser Tabellen
- 10: Hauptspeicher
- 10a: Hauptspeichertabelle
- 12: Vergleichen
- 14: Ermittlung von Unterschieden
- 16: Markierung als Übereinstimmen
- 18: Ermittlung von besten Paaren
- 20: Schwellwertvergleich
- 22: Vergleichsvorrichtung
- 22a: Schnittstellen
- 24: Lesemittel
- 26: Extraktionsmittel
- 28: Speichermittel
- 30: Vergleichsmittel
- 32: Ausscheidungsmittel
- 34: Wichtungsmittel

## Patentansprüche

1. Verfahren zum Vergleich zweier Datenbankabfragen aufweisenden Quelldateien, bei dem
- die Datenbankabfragen aus den zwei Quelldateien ermittelt werden,
- die ermittelten Datenbankabfragen einer ersten Quelldatei mit den ermittelten Datenbankabfragen einer zweiten Quelldatei verglichen werden,
- die Syntax jeder Datenbankabfrage mit Hilfe einer Syntaxanalyse ermittelt wird,
- syntaktische Elemente der Syntaxen der Datenbankabfragen ermittelt werden, und
- jede Datenbankabfrage der ersten Quelldatei mit jeder Datenbankabfrage der zweiten Quelldatei zum Erstellen einer kombinierten Datenbankabfrage kombiniert wird,
**dadurch gekennzeichnet, dass**
- die syntaktische Elemente der Datenbankabfragen, die aus den zwei Quelldateien ermittelt wurden, kategorisiert gespeichert werden,
- die einander entsprechenden syntaktischen Elemente der kombinierten Datenbankabfragen miteinander verglichen werden,
- den syntaktischen Elementen Wertigkeiten zugeordnet werden,
- ein gewichteter Unterschied zwischen den syntaktischen Elementen der kombinierten Datenbankabfragen mit Hilfe der Wertigkeiten ermittelt wird,
- jeder Kombination von Datenbankabfragen mit Hilfe von gewichteten Unterschieden ein Ähnlichkeitswert zugeordnet wird,
- die Ähnlichkeitswerte der kombinierten Datenbankabfragen miteinander verglichen werden,
- identische kombinierte Datenbankabfragen von der weiteren Verarbeitung ausgeschlossen werden,
- mit Hilfe der Ähnlichkeitswerte die besten Paare der kombinierten Datenbankabfragen ermittelt werden, und
- ein Vergleichsergebnis ausgegeben wird.

2. Verfahren nach Anspruch 1,
**dadurch gekennzeichnet, dass** in einer Tabelle für jede ermittelte Datenbankabfrage eine die dazugehörige Syntax bezeichnende Kennung, eine die Datenbankabfrage der Quelldatei zuordnenden Zuordnungskennung und ein ein Vergleichsergebnis mit einer anderen Datenbankabfrage wiedergebender Vergleichswert gespeichert wird.

3. Verfahren nach einem der Ansprüche 1 oder 2,
**dadurch gekennzeichnet, dass** identische kombinierte Datenbankabfragen als identisch ausgewiesen werden.

4. Verfahren nach einem der Ansprüche 1 bis 3,
**dadurch gekennzeichnet, dass** äquivalente kombinierte Datenbankabfragen als identisch ausgewiesen werden.

5. Verfahren nach einem der Ansprüche 1 bis 4,
**dadurch gekennzeichnet, dass** ähnliche kombinierte Datenbankabfragen mit ihrem Ähnlichkeitswert ausgewiesen werden.

6. Verfahren nach einem der Ansprüche 1 bis 5,
**dadurch gekennzeichnet, dass** ein Grenzwert bestimmt und der Ähnlichkeitswert am Grenzwert gemessen wird und mit Hilfe des Grenzwertes die Datenbankabfragen als ähnlich oder unähnlich ausgewiesen werden.

7. Verfahren nach einem der Ansprüche 1 bis 6,
**dadurch gekennzeichnet, dass** die Gesamtabweichung der Datenbankabfragen der ersten Quelldatei von der zweiten Quelldatei ermittelt wird.

8. Vergleichsvorrichtung zum Durchführen des Verfahrens nach einem der Ansprüche 1 bis 7,
- mit Quelldateien lesenden Lesemitteln, und
- mit syntaktische Elemente der Datenbankabfragen aus Quelldateien extrahierenden Extrahiermitteln,
- mit die syntaktische Elemente der Datenbankabfrage kategorisiert speichernden Speichermitteln,
- mit die Syntax einer Datenbankabfrage analysierende Analysemittel die derart angeordnet sind, dass jede Datenbankabfrage der ersten Quelldatei mit jeder Datenbankabfrage der zweiten Quelldatei zum Erstellen einer kombinierten Datenbankabfrage kombiniert wird,
- mit die einander entsprechenden syntaktischen Elemente der kombinierten Datenbankabfragen vergleichenden Vergleichsmitteln,
- mit denn syntaktischen Elementen Wertigkeiten zuordnenden und einen gewichteten Unterschied zwischen den syntaktischen Elementen der kombinierten Datenbankabfragen mit Hilfe der Wertigkeiten ermittelnden Wichtungsmittel, und
- mit die gewichteten Ergebnisse bewertende Ausscheidungsmittel die derart angeordnet sind, dass jeder Kombination von Datenbankabfragen mit Hilfe von gewichteten Unterschieden ein Ähnlichkeitswert zugeordnet wird, die Ähnlichkeitswerte der kombinierten Datenbankabfragen miteinander verglichen werden, identische kombinierte Datenbankabfragen von der weiteren Verarbeitung ausgeschlossen werden, und mit Hilfe der Ähnlichkeitswerte die besten Paare der kombinierten Datenbankabfragen ermittelt werden.

## Claims

1. Process for comparing two source files comprising database queries, in which
- the database queries are determined from the two source files,
- the determined database queries of a first source file are compared with the determined database queries from a second source file,
- the syntax of each database query is determined by a syntax analysis,
- syntactical elements of the database queries are obtained, and
- each database query of the first source file is combined with each database query of the second source file to create a combined database query
**characterised by**
- categorically storing syntactical elements of the database queries determined from the two source files,
- comparing the syntactical elements of the combined database query that correspond to one another,
- assigning ratings to the syntactical elements,
- obtaining a weighted difference between the syntactical elements of the combined database queries with the help of the ratings,
- assigning a similarity value to each combination of database queries with the help of weighted differences,
- comparing the similarity values of the combined database queries with each other,
- excluding identical combined database queries from further processing,
- determining best matching pairs of the combined database queries with the help of the similarity values, and
- displaying the comparison result.

2. Process in accordance with claim 1, **characterised by** storing in a table for each determined database query an identifier marking the appropriate syntax, an assignment identifier assigning the database query of the source file and a comparison result showing the results of a comparison with another database query.

3. Process in accordance with one of claims 1 or 2, **characterised by** marking identical combined database queries as identical.

4. Process in accordance with one of claims 1 to 3, **characterised by** marking equivalent combined database queries as identical.

5. Process in accordance with one of claims 1 to 4, **characterised by** marking similar combined database queries with their similarity value.

6. Process in accordance with one of claims 1 to 5, **characterised by** stipulating a threshold value and measuring the similarity value against the threshold value, and marking the database queries as similar or dissimilar with the help of the threshold value.

7. Process in accordance with one of claims 1 to 6, **characterised by** determining the total deviation of the database queries of the first source file from the second source file.

8. Comparator system for carrying out a process in accordance with one of claims 1 to 7, comprising
- reading means for reading source files,
- extracting means for extracting syntactical elements of database queries from source files,
- storage means for categorically storing syntactical elements of the database queries,
- analysing means for analysing the syntax of a database query arranged such that each database query of the first source file is combined with each database query of the second source file to create a combined database query,
- comparison means for comparing the syntactical elements of the combined database query that correspond to one another,
- weighting means for assigning ratings to the syntactical elements and for obtaining a weighted difference between the syntactical elements of the combined database queries with the help of the ratings,
- differentiation means for evaluating the weighted differences arranged such that a similarity value is assigned to each combination of database queries with the help of weighted differences, the similarity values of the combined database queries are compared with each other, identical combined database queries are excluded from further processing, and best matching pairs of the combined database queries are determined with the help of the similarity values.

## Revendications

1. Procédé de comparaison de deux fichiers sources présentant des requêtes de banque de données, dans lequel
- les requêtes de banque de données sont déterminées à partir des deux fichiers sources,
- les requêtes de banque de données déterminées d'un premier fichier source sont comparées aux requêtes de banque de données déterminées d'un second fichier source,
- la syntaxe de chaque requête de banque de données est déterminée à l'aide d'une analyse de syntaxe,
- des éléments syntaxiques des syntaxes des requêtes de banque de données sont déterminés et
- chaque requête de banque de données du premier fichier source est combinée à chaque requête de banque de données du second fichier source pour créer une requête de banque de données combinée,
**caractérisé en ce que**
- les éléments syntaxiques des requêtes de banque de données que l'on a déterminés à partir des deux fichiers sources, sont enregistrés par catégories,
- les éléments syntaxiques, correspondant les uns aux autres, des requêtes de banque de données combinées sont comparés les uns aux autres,
- des pondérations sont affectées aux éléments syntaxiques,
- une différence pondérée entre les éléments syntaxiques des requêtes de banque de données combinées est déterminée à l'aide des pondérations,
- une valeur de similitude est affectée à chaque combinaison de requêtes de banque de données à l'aide de différences pondérées,
- les valeurs de similitude des requêtes de banque de données combinées sont comparées les unes aux autres,
- les requêtes de banque de données identiques combinées sont exclues du traitement suivant,
- les meilleures paires des requêtes de banque de données combinées sont déterminées à l'aide des valeurs de similitude, et
- un résultat de comparaison est délivré.

2. Procédé selon la revendication 1, **caractérisé en ce qu'**on enregistre dans une table, pour chaque requête de banque de données déterminée, un indicatif spécifiant la syntaxe correspondante, un indicatif d'affectation attribuant la requête de banque de données au fichier source et une valeur de comparaison reproduisant un résultat de comparaison avec une autre requête de banque de données.

3. Procédé selon l'une quelconque des revendications 1 ou 2, **caractérisé en ce que** des requêtes de banque de données combinées identiques sont identifiées comme identiques.

4. Procédé selon l'une quelconque des revendications 1 à 3, **caractérisé en ce que** des requêtes de banque de données combinées équivalentes sont identifiées comme identiques.

5. Procédé selon l'une quelconque des revendications 1 à 4, **caractérisé en ce que** des requêtes de banque de données combinées similaires sont identifiées par leur valeur de similitude.

6. Procédé selon l'une quelconque des revendications 1 à 5, **caractérisé en ce qu'**une valeur limite est déterminée et la valeur de similitude est mesurée à la valeur limite et la valeur limite permet d'identifier les requêtes de banque de données comme similaires ou non similaires.

7. Procédé selon l'une quelconque des revendications 1 à 6, **caractérisé en ce que** l'on détermine l'écart total des requêtes de banque de données du premier fichier source par rapport au second fichier source.

8. Dispositif de comparaison pour réaliser le procédé selon l'une quelconque des revendications 1 à 7, comprenant :
- des moyens de lecture pour lire les fichiers sources, et
- des moyens d'extraction pour extraire des éléments syntaxiques des requêtes de banque de données des fichiers sources,
- des moyens d'enregistrement pour enregistrer par catégories les éléments syntaxiques de la requête de banque de données,
- des moyens d'analyse pour analyser la syntaxe d'une requête de banque de données, lesdits moyens d'analyse étant disposés de sorte que chaque requête de banque de données du premier fichier source soit combinée avec chaque requête de banque de données du second fichier source pour créer une requête de banque de données combinée,
- des moyens de comparaison pour comparer les éléments syntaxiques correspondants les uns aux autres des requêtes de banque de données combinées,
- des moyens de pondération affectant des pondérations aux éléments syntaxiques et déterminant une différence pondérée entre les éléments syntaxiques des requêtes de banque de données combinées à l'aide des pondérations, et
- des moyens de discrimination pour évaluer les résultats pondérés, lesdits moyens étant disposés de sorte qu'à chaque combinaison de requêtes de banque de données soit affectée une valeur de similitude à l'aide de différences pondérées, que les valeurs de similitude des requêtes de banque de données combinées soient comparées les unes aux autres, que des requêtes de banque de données identiques combinées soient exclues du traitement ultérieur et que les meilleures paires des requêtes de banque de données combinées soient déterminées à l'aide des valeurs de similitude.
